## Europäisches Patentamt
## European Patent Office
## Office européen des brevets

(19)

(11) Numéro de publication: **0 122 184**
**B1**

(12) # FASCICULE DE BREVET EUROPÉEN

(45) Date de publication du fascicule du brevet:
**02.09.87**

(51) Int. Cl.⁴: **F 16 F 3/08,** B 60 K 5/12

(21) Numéro de dépôt: **84400589.2**

(22) Date de dépôt: **23.03.84**

(54) **Suspension antivibratoire par élastomères à compensation du fluage.**

(30) Priorité: **23.03.83 FR 8304709**

(43) Date de publication de la demande:
**17.10.84 Bulletin 84/42**

(45) Mention de la délivrance du brevet:
**02.09.87 Bulletin 87/36**

(84) Etats contractants désignés:
**BE DE FR GB IT LU NL**

(56) Documents cité:
**DE-C-647 247**
**DE-U-1 896 798**
**FR-A-930 359**
**FR-A-1 601 695**
**FR-A-2 136 653**
**FR-A-2 351 319**
**FR-A-2 404 152**
**US-A-2 846 210**
**US-A-3 035 799**
**US-A-3 544 048**

(73) Titulaire: **Caoutchouc Manufacturé et Plastiques Société Anonyme dite:, 143, rue Yves- le- Coz B.P. 554, F-78005 Versailles Cedex (FR)**

(72) Inventeur: **Béchu, Jean- Pierre, "Les Poissons" 20 Ter rue de Bezons, F-92400 Courbevoie (FR)**
Inventeur: **Girard, André, 8 rue de Caqueret, F-58300 Decize (FR)**

EP 0 122 184 B1

LIBER, STOCKHOLM 1987

## Description

L'invention concerne un dispositif destiné à l'amortissement des vibrations, par ressorts en élastomères, pour protéger, par filtrage élastique, l'environnement d'une machine et, en particulier, d'un moteur de véhicule terrestre ou marin, tout en assurant une fonction de compensation du fluage des matériaux généralement observé dans les systèmes connus.

Il existe, en effet, de nombreux types de suspension antivibratoires, constitués le plus souvent de sandwiches de caoutchouc adhérisé au métal, présentés dans différentes configurations et géométries, tel celui décrit dans le document US-A-3 035 799, en particulier dans les figures 3 et 4. Si ces dispositifs sont très amortissants, ils sont entachés, en conséquence, d'un fluage important dû au vieillissement des matériaux sous contrainte.

L'invention présentée ici vise à atteindre un maximum d'efficacité dans l'isolation antivibratoire des structures telles que moteurs de véhicules ou machines industrielles tout en conservant ses caractéristiques de fonctionnement au cours du temps grâce à une exacte compensation du fluage des matériaux qui se produit au cours du vieillissement de la pièce. Elle présente, en outre, l'avantage d'utiliser éventuellement dans un même montage, des pièces en caoutchouc adhérisé au métal, de même géométrie mais réalisées avec deux caoutchoucs différents, ce qui permet d'utiliser un seul outillage de moulage pour leur fabrication.

L'invention consiste en un dispositif de suspension antivibratoire de structures mécaniques - telles que les moteurs de véhicules terrestres ou marins ainsi que les machines industrielles - comportant au moins un ressort porteur et un ressort antagoniste en élastomères adhérisés à des armatures externes en métal ou en polymères rigides, lesdits ressort porteur(s) et antagonistes enserrant un appui. Les deux élastomères sont différents par leur nature mais ayant des rigidités voisines, le(ou les) ressort(s) dit(s) porteur(s) étant réalisé(s) avec un matériau élastique assurant la fonction de support de la charge, et le (ou les) ressort(s) dit(s) antagoniste (s) étant réaliseé(s) avec un matériau amortissant assurant la fonction amortissement. L'ensemble du motage est monté précontrainte, grâce à l'utilisation d'un ou plusieurs boulons traversants, susceptible(s) d'être utilisé(s) comme élément(s) de liaison de l'appui à la masse suspendue. La précontrainte permet de compenser très exactement les variations de cote dues au fluage sous charge dans le temps des élastomères.

Un élastomère est ici considéré comme élastique si la valeur de la tangente de l'angle de perte n'excède pas 0,20 alors que le caoutchouc amortissant aura, lui une valeur de la tangente de l'angle de perte supérieure à 0,30. Les ressorts sont montés en précontrainte, de manière telle que le ressort porteur assume la somme de la charge suspendue et de la precontrainte alors que le ressort antagoniste ne supporte que la valeur de la précontrainte.

Afin d'éviter un décollement bruyant et mécaniquement dommageable, la précontrainte doit dépasser toute les variations dynamiques susceptibles d'être appliquées à la charge, et d'autre part prévoir sa réduction au cours du temps sous l'effet du fluage des matériaux. Une valeur raisonnable sera par exemple 50 % de la charge statique, de façon que le ressort porteur de la charge soit sollicité à 150 % de celle-ci.

Pour assurer l'isolation antivibratoire requise, il est bien évident que la rigidité du montage est la somme des rigidités des deux ressorts, et que la meilleure flexibilité ne peut être obtenue qu'en choisissant des flexibilités voisines.

De ce fait, il peut être intéressant, essentiellement pour des raisons économiques de réalisation, d'utiliser, pour le dispositif deux ressorts de même géométrie mais différents par la nature de l'élastomère, qui peuvent ainsi être fabriqués dans le même moule.

Il résulte du montage que le ressort porteur, qui assume la charge permanente est environ trois fois plus sollicité que son antagoniste.

Lors des débattements dynamiques où la charge varie de $\pm$ 20 % par exemple, les contraintes (car ces ressorts ont même rigidité) varient pour l'un entre 140 % et 160 % de la charge statique, pour l'autre entre 40 % et 60 % de celle-ci. Avoir peu de variations sous une sollicitation permanente représente les meilleures conditions d'emploi d'un bon ressort à base de caoutchouc, qui aura de ce fait une faible perte de caractéristiques par fluage, mais simultanément un amortissement interne insuffisant pour l'application envisagée, avec coefficient de résonance inadmissible à la fréquence propre du système.

L'invention consiste à reporter la plus grande part de la fonction amortissement dans le ressort antagoniste grâce à l'emploi de caoutchoucs très amortissants, c'est à dire caractérisés par une tangente de l'angle de perte supérieure à 0,30. Pour éviter l'inconvénient de fluage dans le temps que présente ce type de caoutchoucs - fluage rédhibitoire pour les applications où la cote de la machine doit impérativement rester constante dans le temps - le ressort antagoniste est très peu chargé, environ trois fois moins que le ressort porteur.

Lorsque la loi de fluage a été déterminée, le choix des élastomères permet de compenser très exactement les risques de modification d'altitude du dispositif, au cours du vieillissement, de façon telle que le ressort antagoniste ait exactement les mêmes variations de cotes - sous des charges trois fois moindre - que le ressort porteur.

Les applications où la cote de la structure suspendue doit être maintenue constante au cours du temps permettent alors des alignements d'arbres, des maintiens de jeux fonctionnels et une correction d'assiette, que n'autorisait pas, jusqu'àlors, l'emploi de rossort en élastomère, si, en outre, un amortissement interne était requis.

Les schémas illustreront plus clairement le fonctionnement du système.

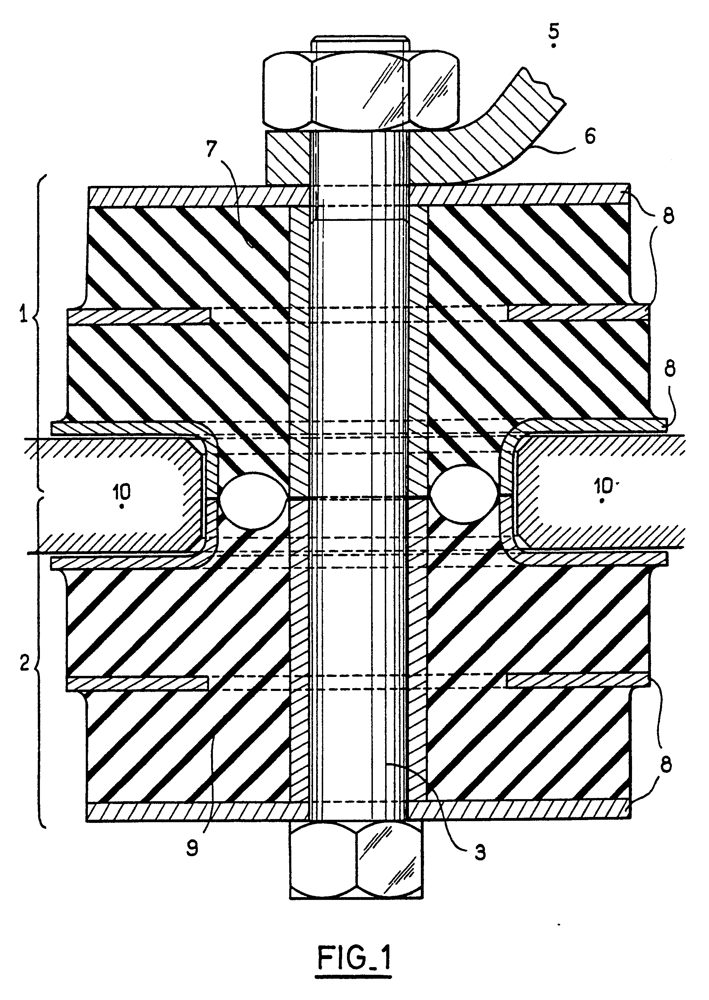

La figure 1 décrit à titre indicatif, un exemple du montage réalisable: le ressort porteur (1) est monté en opposition du ressort antagoniste (2) par l'intermédiaire du boulon traversant (3) qui permet d'assurer une précontrainte et de fixer le dispositif de suspension à la masse suspendue (5) par l'intermédiaire de tout support convenable (6).

Ce montage, est réalisé à partir de deux pièces de même géométrie, enserrant un appui approprié- bâti, chassis...-(10) le ressort porteur (1) et le ressort antagoniste (2); pour des raisons économiques, le coût de fabrication est réduit par l'utilisation d'un seul moule pour la réalisation des deux pièces. Il est cependant possible de réaliser ce montage à partir de deux pièces n'ayant pas la même géométrie mais de rigidités voisines.

Dans la figure 1, le ressort porteur (1) est constitué d'un sandwich de matériau élastique (7) adhérisé à des armatures métalliques (8) alors que le ressort antagoniste (2) est constitué d'un sandwich de caoutchouc amortissant (9) adhérisé à des armatures métalliques semblables (8). Le nombre des armatures intermédiaires est variable selon les caractéristiques de raideur recherchée.

La précontrainte assurée par le boulon traversant (3) peut être, à titre d'exemple non limitatif, telle que le ressort porteur assume environ 150 %, de la charge alors que le ressort antagoniste n'en supporte que 50 %, à l'état neuf.

La figure 2 illustre le diagramme d'équilibre du dispositif. L'abscisse (11) figure les charges, en pourcentage de la charge statique, l'ordonnée (12) figure les cotes d'altitude de la pièce.

Pour une cote d'altitude à l'état neuf (13) due à des valeurs de précompression du ressort porteur d'altitude à l'état libre (14) et du ressort antagoniste d'altitude à l'état libre (15), la position sous l'effet de la charge sera représentée par la cote (16), la charge portée étant illustrée par le segment AB.

Les variations de contrainte de chaque ressort de part et d'autre de cet équilibre sont schématisées par les déplacements des points A et B sur les droites (17) pour le ressort porteur et (18) pour l'antagoniste. Les limites courantes sont, par exemple, pour une surcharge de 20 % les points $A_1$ et $B_1$ et, pour une détente de 20 %, les points $A_2$ et $B_2$.

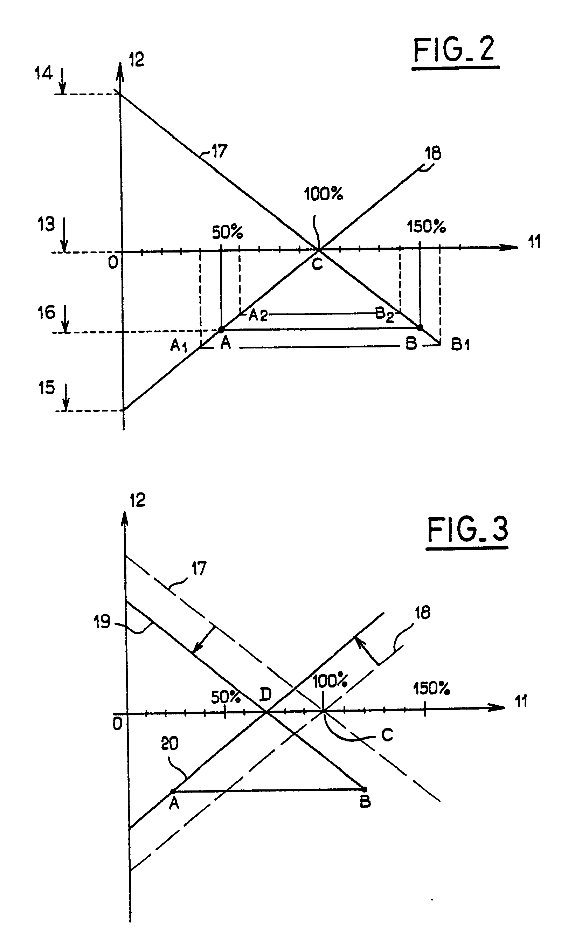

La figure 3 montre l'effet du fluage du ressort porteur qui peut être représenté par un déplacement de la droite (17) en position (19) et de la droite (18) en position (20). Le point d'intersection C des droites (17) et (18) se déplace vers la position D, intersection des droites (19) et (20).

Un montage classique, sous l'effet du fluage du ressort porteur, verrait la cote du point D devenir inférieure à celle du point C en fin de vie de la pièce.

Un fluage exagéré du ressort antagoniste n'exclurait pas la possibilité d'une cote du point D supérieure à celle du point C, également en fin de vie de la pièce: l'énergie potentielle accumulée dans le ressort porteur peut travailler contre la pesanteur.

La caractéristique de l'invention est de maintenir la cote du point D égale à celle du point C tout au long de la durée de service de la pièce.

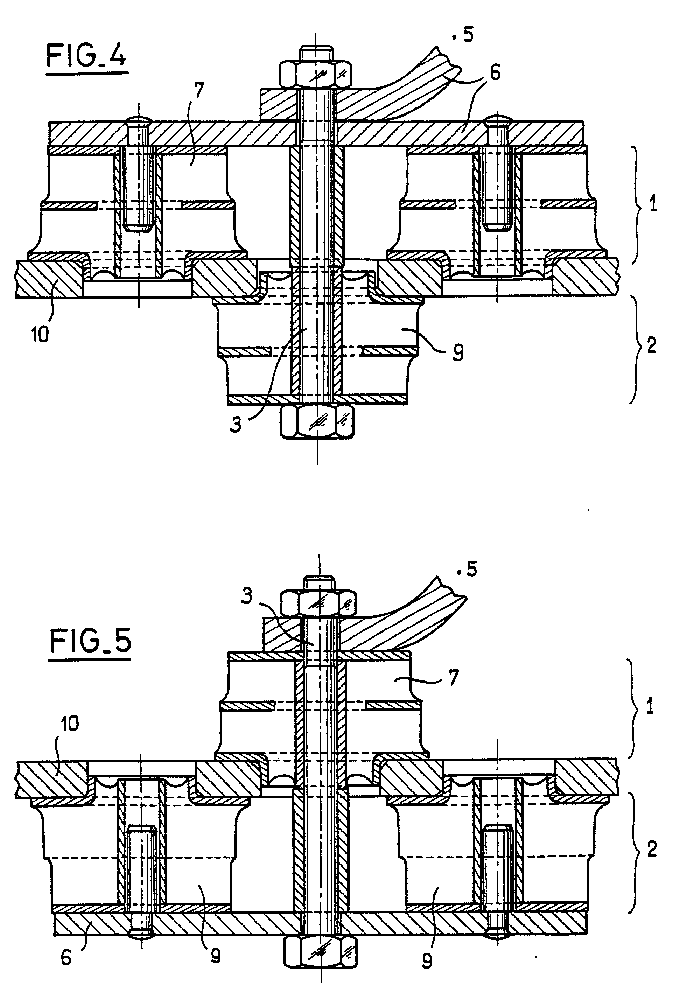

La figure 4 représente une autre disposition de montage des ressorts porteurs et antagoniste qui peut s'avérer avantageuse pour exercer des rigidités analogues. Le ressort antagoniste (2), très amortisseur, est opposé à 2 ressorts porteurs (1) dont la rigidité individuelle est deux fois plus faible que celle du ressort antagoniste, tout en ayant la même définition géométrique.

Une autre disposition possible, non illustré, consiste à opposer à trois ressorts porteurs élastiques un ressort amortissant tous les ressorts ayant même géométrie. Il faudrait alors que la rigidité de chaque élément porteur soit trois fois plus faible que celle du ressort antagoniste.

Les montages ci-dessus décrits permettent de résoudre certains problèmes particuliers du fait que les élastomères les plus amortissants présentent, en général, des modules dynamiques nettement plus élevés que les élastomères très résilients. Les ressorts constitutifs peuvent donc avoir même géométrie associée à des rigidités variant dans le rapport 1 à 2 ou à 3, en disposant, dans ce dernier cas, les ressorts porteurs à 120° sur un support approprié.

La figure 5 décrit la disposition de montage inverse permettant d'atteindre une rigidité élevée par frettage d'un élastomère de faible module (7) au moyen d'armatures intermédiaires adhérisées. L'expérience du caoutchoutier utilise ce moyen pour faire porter des charges élevées même par des matériaux de module faible.

Les ressorts porteur et antagonistes sont de même géométrie externe, par conséquent réalisables, avec ou sans armatures intermédiaires, dans le même moule, ce qui présente un intérêt économique évident. Les ressorts antagonistes ont chacun une rigidité deux fois plus faible que celle du ressort porteur, malgré le module plus élevé du matériau amortisseur.

Ces ressorts antagonistes subissent une faible contrainte par unité de volume ce qui autorise un amortissement viscoélastique élevé en limitant l'échauffement pour des pièces fortement sollicitées.

Une autre disposition possible, non illustrée, consiste à opposer à un ressort porteur élastique, trois ressorts amortissants, dans les conditions décrites à propos de la figure 5, le rapport des rigidités du ressort porteur à chacun des ressorts antagonistes étant alors de 3.

Les 3 ressorts antagonistes sont alors disposés à 120° sur un support approprié.

## Revendications

1. Dispositif de suspension antrivibratoire de structures mécaniques, telles que les moteurs de véhicules terrestres ou marins ainsi que les machines industrielles, comportant au moins un ressort porteur (1) et un ressort antagoniste (2) en élastomères adhérisés à des armatures externes (8) en métal ou en polymères rigides, lesdits ressorts porteur(s) (1) et antagonistes (2) enservant un appui (10) et montés sous une précontrainte exercée par l'intermédiaire d'un moyen-en soi connu- constitué d'un ou plusieurs boulon(s) traversant(s) (3), susceptible(s) d'être utilisé(s) comme élément(s) de liaison de l'appui à la masse suspendue, caractérisé en ce que lesdits ressorts porteur(s) (1) et antagoniste(s) (2) sont réalisés dans deux élastomères différents, respectivement élastique (7) et amortissant (9) de rigidités voisines.

2. Dispositif selon la revendication 1, caractérisé en ce que le nombre de ressort(s) porteur(s) (1) est différent du nombre de ressort(s) antagoniste(s) (2), que tous les ressorts ont même géométrie externe et que la rigidité de l'ensemble porteur (1) est voisine de celle de l'ensemble antagoniste (2).

3. Dispositif selon la revendication 1, caractérisé en ce que les ressorts sont au nombre de 2, l'un porteur (1) et l'autre antagoniste (2), qu'ils ont même géométrie et qu'ils sont montés en opposition de façon que le matériau élastique (7) supporte des contraintes au moins deux fois plus élevées que le matériau amortissant (9).

4. Dispositif selon l'une des revendications 1 à 3 caractérisé en ce que les ressorts comportent des armatures intermédiaires en métal ou en polymère rigide.

## Patentansprüche

1. Antischwingungsaufhängung für mechanische Einrichtungen. wie z. B. Motoren für Land- oder Wasserfahrzeugen wie auch industriellen Maschinen, bestehend aus Federn aus einam Elastomer, das mit äußeren Verstärkungen (8) aus Metall oder einem starren Polymer verklebt ist, dadurch gekennzeichnet, daß mindestens eine Tragfeder (1) und eine Gegenfeder (2) vorhanden sind, daß die Tragfeder und die Gegenfeder aus zwei verschiedenen Elastomeren hergestellt sind, nämlich einem elastischen Elastomer (7) und einem schwingungsdämpfenden Elastomer (9) ähnlicher Härte, und daß die Tragfeder und die Gegenfeder unter Vorspannung montiert wird, die von einem oder mehreren an sich bekannten Querbolzen (3) ausgeübt wird, die als Verbindungselement der Aufhängung mit der aufgehängten Masse verwendbar sind, wobei die Vorspannung ein genaues Ausgleichen der Schwankungen der Höhenlinien infolge Fließens durch Alterung der Elastomere ermöglicht.

2. Aufhängung nach Anspruch 1, dadurch gekennzeichnet, daß die Anzahl der Tragfedern (1) von der Anzahl der Gegenfedern (2) abweicht, daß alle Federn die gleiche äußere Form haben und daß die Härte der Gesamtheit der Trägerfedern (1) der Härte der Gesamtheit der Gegenfedern (2) ähnelt.

3. Aufhängung nach Anspruch 1 oder 2, dadurch gekennzeichnet, daß insgesamt zwei Federn vorhanden sind, nämlich eine Trägerfeder (1) und eine Gegenfeder (2), daß die Federn die gleiche Form haben und daß die Belastung des elastischen Materials (7) mindestens zweimal großer ist als die des schwingungsdämpfenden Materials (9).

4. Aufhängung nach einem der Ansprüche 1 bis 3, dadurch gekennzeichnet, daß die Federn zwischengefügte Verstärkungen aus Metall oder einem starren Polymer aufweisen.

## Claims

1. Antivibratory suspension device for mechanical structures such as the engines of ground vehicles or marine craft as well as industrial machines, comprising at least one carrier spring (1) and an opposing spring (2) of elastomers bonded to external supports (8) of metal or rigid polymers, the said carrier and opposing springs (1) and (2) encompassing a support (10) and mounted under a preconstraint exerted through the intermediary of a means known per se formed by one or more through bolts (3) able to be utilised as elements for connection of the support to the suspended mass, characterised in that the said carrier and opposing springs (1) and (2) are produced from two different elastomers, which are respectively elastic (7) and damping (9) and of similar rigidities.

2. Device according to claim 1, characterised in that the number of carrier springs (1) differs from the number of opposing springs (2), that all the springs have the same external geometry and that the rigidity of the carrier assembly (1) is close to that of the opposing assembly (2).

3. Device according to claim 1, characterised in that there are two springs, the one being a carrier spring (1) and the other an opposing spring (2), that they have the same geometry and that they are installed in opposition in such a manner that the elastic material (7) supports stresses which are at least twice as great as those borne by the damping material (9).

4. Device according to one of the claims 1 to 3, characterised in that the springs comprise intermediate fittings of metal or of a rigid polymer.

0 122 184

FIG_1

FIG.2

FIG.3

FIG.4

FIG.5